# EUROPÄISCHE PATENTSCHRIFT

(11) **EP 3 805 662 B1**
(45) Veröffentlichungstag und Bekanntmachung des Hinweises auf die Patenterteilung: **09.04.2025**
(21) Anmeldenummer: 20188710.6
(22) Anmeldetag: 25.02.2016
(51) Int. Cl.: F24H 8/00, F24H 9/00

(54) **ANSCHLUSS FÜR KONDENSATABLAUF EINES HEIZGERÄTS**
CONNECTION FOR CONDENSATE DRAIN OF A HEATING DEVICE
RACCORDEMENT POUR DRAIN DE CONDENSAT D'UN APPAREIL DE CHAUFFAGE

(30) Priorität: 09.03.2015 DE 102015204187; 10.03.2015 DE 102015204297; 01.09.2015 DE 102015216688
(43) Veröffentlichungstag der Anmeldung: 14.04.2021
(62) Teilanmeldung aus: 16707068.9
(73) Patentinhaber: Robert Bosch GmbH, 70442 Stuttgart (DE)
(72) Erfinder: Cantuerk, Yildirim, 73730 Esslingen (DE); Sauer, Alexander, 74638 Waldenburg (DE); Wieland, Bernd, 73760 Ostfildern (DE); Oehrlein, Manfred, 73278 Schlierbach (DE); Fischer, Ralf, 73730 Esslingen (DE); Ramkumar, Shivakumar, 560076 Bangalore (IN)

(56) Entgegenhaltungen:
- EP-A2- 2 634 471
- DE-A1- 10 025 729
- DE-A1- 10 101 115
- DE-A1- 10 111 073
- DE-A1- 19 923 546
- DE-U1- 9 111 394
- DE-U1- 9 314 195

## Beschreibung

### Stand der Technik

Die Erfindung betrifft einen Anschluss für ein Kondensat eines Heizgeräts, mit einem Gehäuse, das mit einem Abgasweg verbunden oder verbindbar ist und das einen Kondensatausgang aufweist sowie ein Heizgerät mit einem solchen Anschluss. Moderne Heizgeräte sind in der Regel als sogenannte Brennwertgeräte ausgerüstet, bei denen das Abgas so weit abgekühlt wird, dass im Abgas enthaltene Wasserdampf kondensiert. Dieses Kondensat muss aus dem Heizgerät herausgeführt und entsorgt werden. In der Regel weisen Brennwertgeräte einen Bereich auf, aus dem Verbrennungsluft über ein Gebläse angesaugt wird und der deshalb leicht unter Unterdruck stehen kann. Im Verbrennungsbereich nach dem Gebläse und im Abgasbereich herrscht demgegenüber ein leichter Überdruck.

Um das anfallende Kondensat abführen zu können, ist in einem unteren Bereich ein Anschluss vorgesehen, über den das Kondensat dem Abwasser zugeführt werden kann. Hierbei gilt es zu vermeiden, dass Abgas über die Kondensatleitung unkontrolliert mit abgeführt wird oder in die direkte Umgebung des Heizgeräts gelangt.

Derartige Geräte sind beispielsweise aus der DE10101115A1 bekannt.

### Vorteile der Erfindung

Der erfindungsgemäße Anschluss zeichnet sich dadurch aus, dass an den Kondensatausgang ein Schlauch angeschlossen ist, der in einen ersten Bereich unterhalb des Gehäuses geführt ist und von dort in einem Bogen nach oben geführt ist. Dadurch wird erreicht, dass eine größere Wassersäule im Schlauchbogen den Über- und Unterdruckverhältnissen gegenübersteht. Druckschwankungen werden durch das Gewicht des Wassers ausgeglichen. Der erfindungsgemäße Anschluss zeichnet sich auch dadurch aus, dass das Gehäuse mit einem Unterdruckbereich eines Ansaugbereichs für die Verbrennungsluft verbunden ist. Abgas, das unberechtigt in das Gehäuse gelangt, kann auf diese Weise einfach in den Verbrennungskreislauf zurückgeführt werden.

Wird der Schlauch nach dem Bogen bis mindestens auf die Höhe des Gehäuses geführt, kann ein effektives Wasserschloss im Bereich des Gehäuses geschaffen werden.

Der erfindungsgemäße Anschluss für ein Kondensat eines Heizgeräts beziehungsweise eine vorteilhafte Weiterbildung zeichnet sich auch dadurch aus, dass an den Kondensatausgang ein Schlauch angeschlossen ist, der in einem ersten Bereich unterhalb des Gehäuses geführt ist und in einem zweiten Bereich oberhalb des Gehäuses geführt ist. In diesem Fall wird der Wasserverschluss bis in den Abgassammler gehoben, wodurch alle Dichtungen des Gehäuses vom Kondenswasser umgeben und vor Undichtheit geschützt sind.

Eine einfache Ausführungsart ergibt sich, wenn der Schlauch im ersten Bereich innerhalb des Gehäuses eines Speichers geführt ist. Im Falle eines unter dem Heizgerät angeordneten Speichers wird dessen Isolierung effektiv ausgenutzt, um den Schlauch zu verlegen.

Der erfindungsgemäße Anschluss beziehungsweise eine vorteilhafte Weiterbildung zeichnet sich auch dadurch aus, dass das Gehäuse eine oder mehrere Dichtungen aufweist, die in Dichtungskammern angeordnet sind und dass die Dichtungskammern oder den Dichtungskammern benachbarte Bereiche mit dem Unterdruckbereich eines Ansaugbereichs für die Verbrennungsluft verbunden sind. Sollten die Dichtungen undicht werden und Abgas unberechtigt in diesen Bereich gelangen, wird dies durch diese Maßnahme in den Verbrennungskreislauf zurückgeführt.

Der erfindungsgemäße Anschluss beziehungsweise eine vorteilhafte Weiterbildung zeichnet sich auch dadurch aus, dass das Gehäuse mindestens eine Dichtung aufweist, die mindestens ein Öffnung oder mehrere Öffnungen aufweist. Gerade durch die besondere Ausgestaltung der Dichtung mit Öffnungen, kann erreicht werden, dass unberechtigt eingedrungenes Abgas durch die Dichtungen bzw. deren Öffnung in andere Bereiche insbesondere in den Unterdruckbereich im Bereich der Verbrennungsluftversorgung geführt wird.

Ist das Gehäuse zweiteilig und weist mindestens zwei Dichtungen auf, die ihrerseits von Öffnungen durchdrungen sind, wird der Effekt mehrfach ausgenutzt.

Es ist von besonderem Vorteil, wenn über die Öffnung oder die Öffnungen in der Dichtung oder den Dichtungen eine Verbindung mit dem Unterdruckbereich geschaffen ist.

Unabhängig davon, ob der Siphon durch einen Schlauch oder in anderer Weise gebildet ist, ist es von Vorteil, dass das den Anschluss bildende Gehäuse mit einer Dichtung gegenüber dem Abgasweg abgedichtet ist. Durch Öffnungen in der Dichtung ist gewährleistet, dass Abgas, sofern es sich im Kondensatweg befindet, durch den Unterdruck abgesaugt und der Verbrennungsluft zugeführt wird. Die Öffnungen in der Dichtung verbinden folglich den Kondensat-Wasserbereich mit dem unter Unterdruck stehenden Bereich des Heizgeräts.

Eine besonders einfache Montageweise ergibt sich, wenn das Gehäuse mit dem Abgasweg über eine Steckverbindung oder über eine Steck-Drehverbindung verbunden ist.

In vorteilhafter Weise ist die Steckverbindung oder die Steck-Drehverbindung verriegelbar. In verschiedenen Varianten ist gezeigt, wie das Gehäuse des Anschluss als Steckverbindung (Variante 4) oder als Steck Drehverbindung (Varianten 1, 3, 5) ausgebildet sein können. Die Steckverbindung bzw. die Steck-Drehverbindung sind gegen versehentliches Öffnen mit einem Riegel gesichert.

Eine montagefreundliche Handhabung ergibt sich, wenn die Verriegelung mittels eines Hebels erfolgt.

Der Riegel kann (Variante 5) durch ein den Schlauch aufnehmendes Kunststoffelement gebildet sein. Der Riegel kann auch als einfache Stange oder Blechteil ausgebildet sein (Varianten 1, 3). Es ist jedoch auch möglich, einen drehbeweglichen Hebel einzusetzen. Dieser drehbewegliche Hebel kann seinerseits über einen Rastzapfen verriegelbar sein.

Es kann ein zusätzlicher Siphon erzeugt werden, wenn das Gehäuse Kammern aufweist, in denen sich Kondensat staut. Umspült das Kondensat dabei die Dichtung, ist diese vor dem Austrocknen und Verspröden geschützt.

Weist das Gehäuse Kammern auf, in denen sich Feststoffteilchen absetzen können, können diese in einfacher Weise aufgefangen und später entsorgt werden.

Die Erfindung betrifft auch ein Heizgerät mit einem erfindungsgemäßen Anschluss für ein Kondensat. Ein solches Heizgerät hat den Vorteil, dass es besonders sicher und wartungsfreundlich ausgestaltet ist. Die Sicherheit kommt zum einen durch die hohe und damit druckunempfindliche Wassermenge, die durch den im Heizgerät bzw. im zum Heizgerät gehörenden Speicher verlegten, einen Siphon bildenden Schlauch aufgenommen werden kann, sowie durch die besondere Ausgestaltung der Dichtungen und deren Entlüftung. Die Wartungsfreundlichkeit des Heizgeräts ist dadurch gegeben, dass nach dem Öffnen des Heizgerätegehäuses die einfache Handhabung des Anschlusses die Demontage, Reinigung und die Montage des Kondensatauslasses erleichtert.

Das System des Anschusses, insbesondere im Heizgerät, mit seinen aufeinander abgestimmten Komponenten, nämlich dem besonderen Gehäuse mit seinen, Öffnungen aufweisenden Dichtungen, die zusammen mit Öffnungen im Gehäuse den Kondensatbereich mit dem Unterdruckbereich des Heizgeräts verbinden, sowie dem in den unten liegenden Speicher geführten Schlauch, der eine große Kondensatwassermenge aufnehmen kann und dadurch unempfindlich wird gegenüber Druckschwankungen und dessen dem Gehäuse zugewandte Seite über die Sicherheitsfunktion der besonderen Öffnungen im Gehäuse sowie in den Dichtungen mit dem Unterdruckbereich des Heizgeräts korrespondieren kann, bilden ein sehr sichereres und einfach zu handhabenden Kondensatabfluss aus. Dieses System kann unter der Voraussetzung, dass es die Platzverhältnisse erlauben, auch nachträglich in Heizgeräten eingebaut werden, sodass diese von dessen Kompaktheit und Vorteilen profitieren.

### Zeichnung

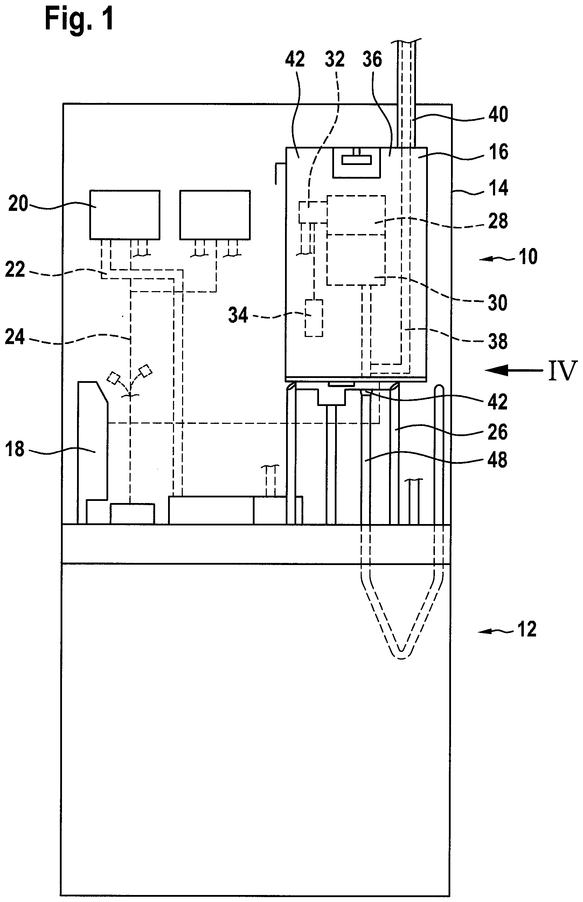

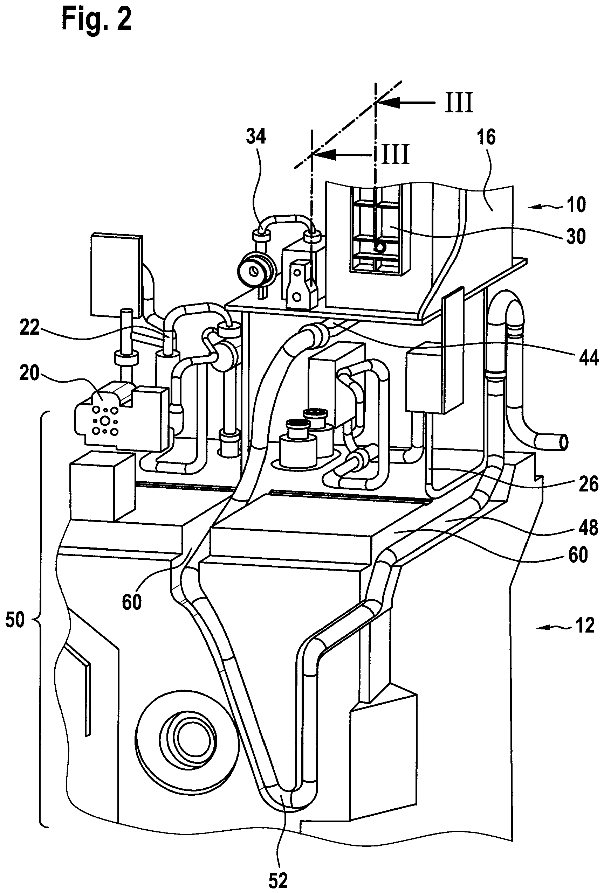

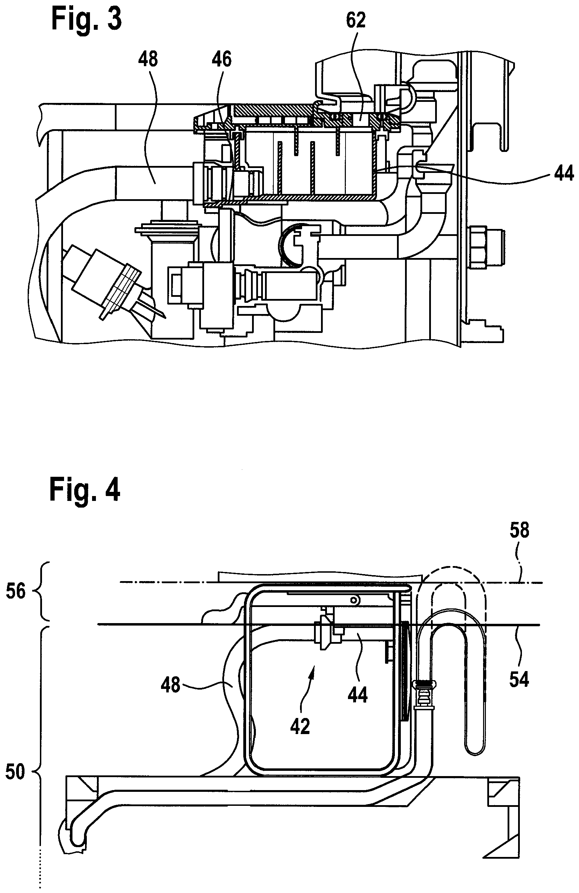

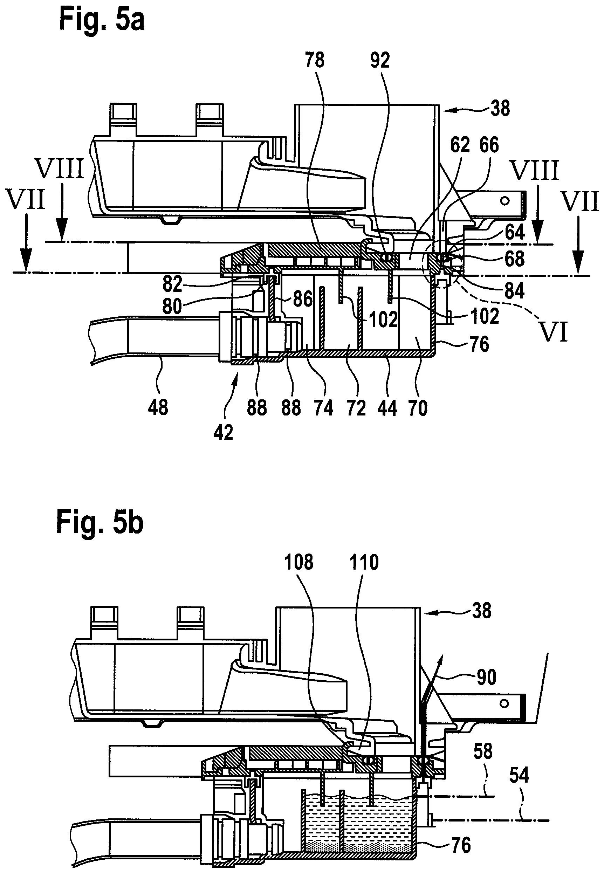

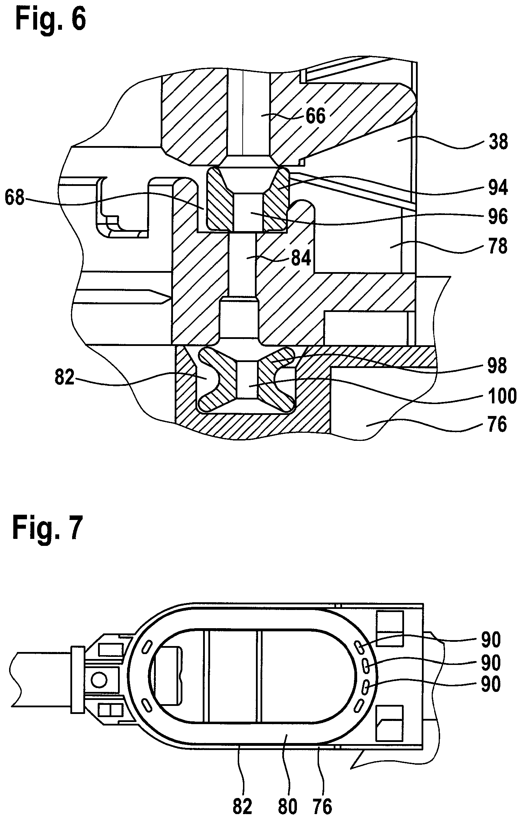

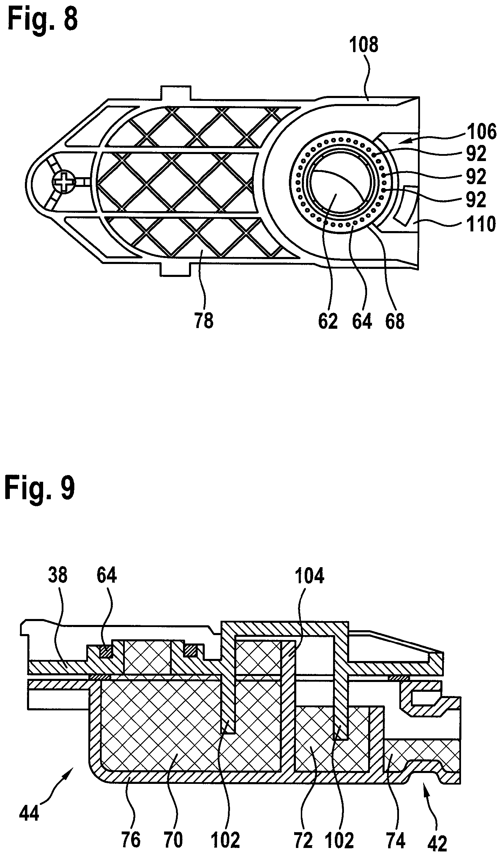

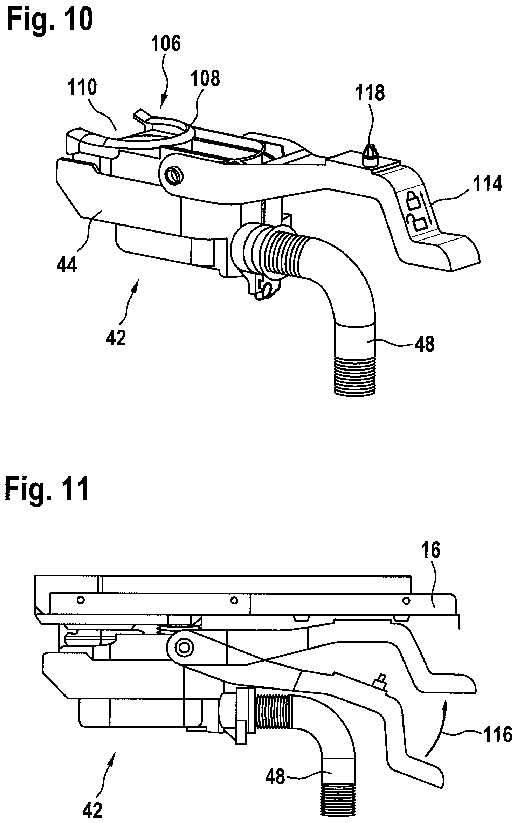

In der Zeichnung ist ein Ausführungsbeispiel des erfindungsgemäßen Heizgeräts dargestellt und in der nachfolgenden Beschreibung näher erläutert. Es zeigen Figur 1 eine schematische Ansicht eines Heizgeräts auf einem Speicher, Figuren 2 einen detaillierten Ausschnitt aus einem Heizgerät auf einem Speicher, wobei der Verlauf des Schlauches erkennbar ist, Figur 3 einen Schnitt nach Linie III-III in Figur 2, Figur 4 ein Gehäuse im Schnitt nach einer Ansicht IV in Figur 1, die Figuren 5a und 5b die Ansicht nach Figur 3 in vereinfachter Form, Figur 6 eine Einzelheit nach Linie VI in Figur 5A, Figur 7 eine Ansicht nach Linie VII-VII in Figur 5a, Figur 8 eine Ansicht nach Linie VIII-VIII in Figur 5a, Figur 9 ein weiteres Ausführungsbeispiel und die Figuren 10 bis 14 unterschiedliche Varianten von Steckverschlüssen bzw. Steck-Drehverschlüssen.

### Ausführungsbeispiele der Erfindung

In den unterschiedlichen Ausführungsbeispielen sind gleiche Bauteile mit gleichen Bezugsziffern bezeichnet.

In Figur 1 ist ein Heizgerät 10 schematisch dargestellt, das im Ausführungsbeispiel auf einem Speicher 12 angeordnet ist. Das Heizgerät 10 weist ein Heizgerätgehäuse 14 auf, das je nach Ausstattungsgrad unterschiedliche Komponenten aufnimmt.

Als wesentliche Komponenten befinden sich eine Wärmezelle 16, eine Steuerung 18, eine oder mehrere Pumpen 20 sowie Verrohrungen 22, Kabel- oder Busleitungen 24 und Haltemittel 26 im Heizgerät 10. Auch bei den einzelnen Komponenten hängt deren Anzahl und Komplexität vom Ausstattungsgrad des Heizgeräts 10 ab.

Die Wärmezelle 16 weist einen Brenner 28, einen Wärmetauscher 30, ein Gebläse 32, eine Ventilbaugruppe 34 sowie ein Zuluftsystem 36 und ein Abgassystem 38 auf. Das Zuluftsystem 36 und das Abgassystem 38 sind an einen als Doppelrohr ausgeführten Kamin 40 angeschlossen.

Im unteren Bereich der Wärmezelle 16 ist ein Anschluss 42 für ein Kondensat des Heizgeräts 10 vorgesehen. Der Anschluss 42 besitzt ein Gehäuse 44 (Figuren 2, 3), das mit einem Abgasweg des Abgassystems 38 verbunden ist. Das Gehäuse 44 besitzt einen Kondensatausgang 46, an den ein Schlauch 48 angeschlossen ist.

Wie insbesondere in Figur 2 erkennbar ist, ist der Schlauch 48 in einem ersten Bereich 50 unterhalb des Gehäuses 44 geführt und beschreibt dort einen Bogen 52 um dann wieder nach oben zu verlaufen. Innerhalb des Bereichs 50 kann das Kondenswasser so hoch stehen, wie der Schlauch 48 nach dem Bogen 52 wieder in die Höhe geführt wird. Dadurch ergibt sich eine Kondenswassermenge, die zwei Wassersäulen aufbaut, die Druckschwankungen zwischen Innen- und Außendruck ausgleichen. Dies ist beispielsweise dann besonders vorteilhaft, wenn der Kamin 40 von Windböen beaufschlagt wird oder wenn es nach einer längeren Ruhephase ein Neustart zu einer vorübergehenden inhomogenen Verbrennung und zu impulsartigen Druckschwankungen im Abgassystem kommen kann.

In Figur 4 ist dargestellt, dass der Schlauch 48 nach dem Bogen bis mindestens auf die Höhe des Gehäuses 44 geführt ist. Dadurch ergibt sich ein Wasserstand der durch die Linie 54 angedeutet ist und der erkennbar den gesamten Schlauch 48 im Bereich des Gehäuses 44 - also den Kondensatanschluss 42 - unter Wasser setzt.

In Figur 4 ist auch dargestellt, dass in einem weiteren Ausführungsbeispiel der Schlauch 48 bis in einem zweiten Bereich 56 geführt ist, der oberhalb des Gehäuses 44 angesiedelt ist. Dadurch wird erreicht, dass der Wasserstand bis zu einer Linie 58 reicht und so das gesamte Gehäuse 44 unter Wasser setzt.

Bereits eingangs wurde beschrieben, dass das Heizgerät 10 auf einem Speicher 12 angeordnet ist. Diese Anordnung wird ausgenutzt, um den Schlauch 48 effektiv zu verlegen. Dazu wird, wie in Figur 2 dargestellt, ein Teil der Isolierung 60 entfernt und der Schlauch 48 dort in die entstehende Vertiefung hinein verlegt. Wird später das Gehäuse des Speichers 12 angebracht, ist die Schlauchführung ebenfalls mit verdeckt.

Hier kann die Größe des Speichers 12 ausgenutzt werden, um den Bereich 50 und damit die Wassersäulen entsprechend groß aufzubauen, was innerhalb des Heizgeräts 10 nicht möglich wäre.

In den Figuren 5a und 5b sind ein Abgassystem 38 sowie das Gehäuse 44 und der Schlauch 48 im Schnitt dargestellt. Es ist erkennbar, dass am unteren Ende des Abgassystems 38 eine Öffnung 62 vorgesehen ist, über die im Wärmetauscher 30 oder im Abgassystem 38 anfallendes Kondensat in das Gehäuse 44 fließen kann. Das Gehäuse 44 ist nun von unten mit dem Abgassystem 38 über eine Dichtung 64 verbunden. Im Bereich der Dichtung 64 ist ein Kanal 66 gezeigt, der das Gehäuse mit dem inneren der Wärmezelle 16 verbindet. Da die Wärmezelle 16 bedingt durch die Saugleistung das Gebläse 32 unter einem Unterdruck steht, steht das Gehäuse 44 ebenfalls unter Unterdruck.

Im Gehäuse 44 ist die Dichtung 64 in einer Dichtungskammer 68 untergebracht, an der wiederum der Kanal 66 angreift. Im Ausführungsbeispiel ist das Gehäuse 44 zweiteilig aufgebaut mit einem unteren, Kammern 70, 72, 74 aufweisenden Gehäuseteil 76 und einem oberen, die Öffnung 62 aufnehmenden Deckelteil 78. Zwischen dem Deckelteil 78 und dem Gehäuseteil 76 ist ebenfalls eine umlaufende Dichtung 80 in einer Dichtungskammer 82 angeordnet. Die Dichtungskammer 82 ist ihrerseits über einen Kanal 84 mit der Dichtungskammer 68 verbunden. Über einen weiteren Kanal 86 ist die Dichtungskammer 82 auch mit einem durch zwei O-Ringdichtungen 88 abgegrenzten Bereich des Anschlusses 42 verbunden. Durch dieses Kanal - Kammersystem wird gewährleistet, dass im Falle einer Alterung einer dieser Dichtungen Abgas, das durch diesen Bereich kommen könnte, in den Unterdruckbereich der Wärmezelle 16 gesaugt wird. Dies ist durch den Pfeil 90 in Figur 5b dargestellt.

Die Dichtung 64 in Figur 5a weist Öffnungen 92 auf, wie sie auch in Figur 8 erkennbar sind. Durch diese Öffnungen 92 ist gewährleistet, dass die Dichtungskammer 68 rund um die Dichtung 64 mit dem Kanal 66 verbunden ist. Auch die Dichtung 80 (Figur 7) weist solche Öffnungen 90 auf, sodass auch hier die Dichtungskammer 82 über die Kanäle 86 und 84 der Dichtungskammer 68 verbindbaren ist.

In den Figuren 5, 7 und 8 sind die Dichtung 64 als mit Öffnungen 92 versehene O-Ringdichtung und die Dichtung 80 als eine im Querschnitt U-förmige-Dichtung mit Öffnungen 92 dargestellt. In Figur 6 sind hierzu Alternativen gezeigt. Die der Dichtung 64 entsprechende Dichtung 94 ist im Querschnitt ungefähr rechteckig mit sich nach oben öffnenden Öffnungen 96. Die der Dichtung 80 entsprechende Dichtung 98 weist im Querschnitt gesehen eine X-Form auf und ist von geraten Öffnungen 100 durchdrungen.

Wie weiter in Figur 5a und 5b gezeigt ist, bilden die Kammern 70 bis 74 zusammen mit vom Deckelteil 78 ragenden Stege 102 siphonartige Strukturen, in denen sich das Kondensatwasser aufstauen kann und die einen Luftverschluss erzeugen. Ferner ist erkennbar, dass in den Kammern des Gehäuseteils 76 Feststoffpartikel abgelagert werden können, die auf diese Weise nicht durch den Schlauch 48 in das Abwassersystem gelangen. Bei einer üblichen Wartung werden diese Kammern 70 bis 74 regelmäßig entleert und gereinigt. Dazu kann das Gehäuse 44 durch einen einfachen Mechanismus abgenommen werden. Einzelheiten dazu werden später beschrieben.

In Figur 9 ist ein weiteres Ausführungsbeispiel dargestellt, bei dem das Gehäuse 44 ein unteres Gehäuseteil 76 aufweist, das seinerseits aber direkt an das Abgassystem 38 angeschlossen ist. Die Kammern 70 bis 74 sind ebenfalls im Gehäuseteil 76 ausgebildet, wobei die Stege 102 zur Erzeugung einer Siphon-Struktur vom Gehäusedeckel des Abgassystems ragen. Die Trennung zwischen der Kammer 70 und 72 ist dabei besonders hoch angesiedelt und ragt mit einer Kammerwand 104 bis über die Trendebene zwischen dem Abgassystem 38 und dem Gehäuse 44. Dadurch wird der Bereich der Dichtung 64 ebenfalls mit Kondenswasser bedeckt. Ein solches Wasserstandniveau kann insbesondere mit einer Anordnung des Schlauches 48 bis auf ein Niveau 58 - wie in Figur 4 gezeigt -, erreicht werden.

In den Figuren 10 und 11 ist ein Anschluss 42 dargestellt, an dessen Gehäuse 44 ein einseitig offener Steckverschluss 106 angeordnet ist. Dieser Steckverschluss 106 ist auch in den Figuren 5a, 5b und 8 dargestellt. Dort ist erkennbar, dass das Deckelteil 78 um die Öffnung 62 einen umlaufenden Ringbund 108 aufweist, der an einer Stirnseite eine Ausnehmung 110 besitzt. Mit dieser Ausnehmung 110 lässt sich der Anschluss 42 auf einen umlaufenden Kragen 112 aufschieben.

Nach dem Aufschieben wird der Anschluss 42 mittels eines Hebels 114 arretiert. Im Ausführungsbeispiel wird der Hebel 114 (siehe insbesondere Figur 11) entlang des Pfeils 116 nach oben geschwenkt und über eine Rastvorrichtung 118 mit dem Gehäuse der Wärmezelle 16 verrastet. Zum Öffnen muss lediglich der Hebel 114 nach unten geschwenkt und der Anschluss 42 vom Kragen 112 abgezogen werden.

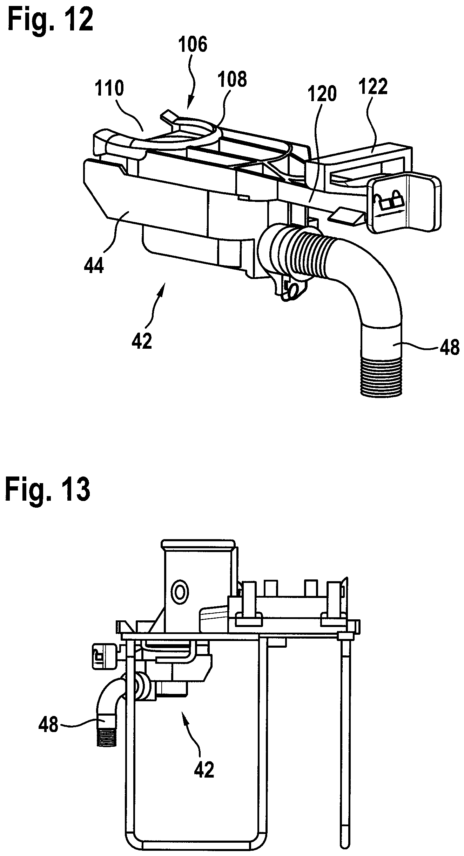

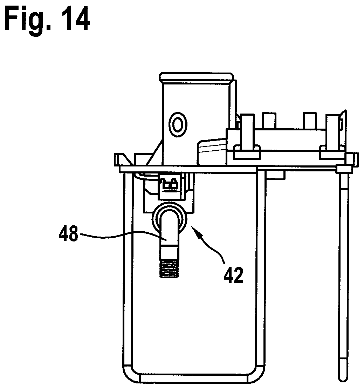

In den Figuren 12 bis 14 ist ein Steckdrehverschluss 106 dargestellt, bei dem der Anschluss 42 um einen bestimmten Winkel verdreht mit seinem Ringbund 108 über den Kragen 112 geschoben wird, um dann um eben diesen Winkel verdreht zu werden. In der endgültigen Position rastet ein Sicherungsarm 120 in eine Raste 122 ein und sichert diese Position. Die Raste 122 ist ihrerseits wieder am Gehäuse der Wärmezelle 16 befestigt. In den Figuren 13 und 14 ist das Verdrehen in zwei Positionen dargestellt.

Die dargestellten und beschriebenen Ausführungsbeispiele sind nicht auf die jeweiligen konkreten Ausführungsformen beschränkt, es liegt im Ermessen des Fachmanns, die einzelnen technischen Lösungen entsprechend zu kombinieren.

## Patentansprüche

1. Anschluss für ein Kondensat eines Heizgeräts (10), mit einem Gehäuse (44), das mit einem Abgasweg (38) verbunden oder verbindbar ist und das einen Kondensatausgang (46) aufweist, wobei an den Kondensatausgang (46) ein Schlauch (48) angeschlossen ist, der in einen ersten Bereich (50) unterhalb des Gehäuses (44) geführt ist und dort in einem Bogen (52) nach oben geführt ist,
**dadurch gekennzeichnet, dass** das Gehäuse (44) mit einem Unterdruckbereich eines Ansaugbereichs für die Verbrennungsluft verbindbar ist.

2. Anschluss nach Anspruch 1, **dadurch gekennzeichnet, dass** der Schlauch (48) nach dem Bogen (52) bis mindestens auf die Höhe des Gehäuses (44) geführt ist.

3. Anschluss nach einem der vorhergehenden Ansprüche, **dadurch gekennzeichnet, dass** an den Kondensatausgang (46) ein Schlauch (48) angeschlossen ist, der in einem ersten Bereich (50) unterhalb des Gehäuses (44) geführt ist und in einem zweiten Bereich oberhalb des Gehäuses (44) geführt ist.

4. Anschluss nach einen der vorhergehenden Ansprüche, **dadurch gekennzeichnet, dass** der Schlauch (48) im ersten Bereich (50) innerhalb eines Gehäuses eines Speichers (12) geführt ist.

5. Anschluss nach einem der vorhergehenden Ansprüche, **dadurch gekennzeichnet, dass** das Gehäuse (44) eine oder mehrere Dichtungen (64, 80) aufweist, die in Dichtungskammern (68, 82) angeordnet sind und dass die Dichtungskammern (68, 82) oder den Dichtungskammern (68, 82) benachbarte Bereiche mit dem Unterdruckbereich eines Ansaugbereichs für die Verbrennungsluft verbunden ist bzw. sind.

6. Anschluss nach einem der vorhergehenden Ansprüche, **dadurch gekennzeichnet, dass** das Gehäuse (44) mindestens eine Dichtung (64, 80) aufweist, die mindestens ein Öffnung (94, 100) oder mehrere Öffnungen aufweist.

7. Anschluss nach einem der vorhergehenden Ansprüche, **dadurch gekennzeichnet, dass** das Gehäuse zweiteilig ist und mindestens zwei Dichtungen (64, 80) aufweist, die ihrerseits von Öffnungen (94, 100) durchdrungen sind.

8. Anschluss nach einem der vorhergehenden Ansprüche, **dadurch gekennzeichnet, dass** über die Öffnung (94, 100) oder die Öffnungen (94, 100) in der Dichtung (64, 80) oder den Dichtungen (64, 80) eine Verbindung mit dem Unterdruckbereich geschaffen ist.

9. Anschluss nach einem der vorhergehenden Ansprüche, **dadurch gekennzeichnet, dass** das Gehäuse (44) mit dem Abgasweg über eine Steckverbindung (106) oder über eine Steck-Drehverbindung (106) verbunden ist.

10. Anschluss nach einem der vorhergehenden Ansprüche, **dadurch gekennzeichnet, dass** die Steckverbindung (106) oder die Steck-Drehverbindung (106) verriegelbar ist.

11. Anschluss nach einem der vorhergehenden Ansprüche, **dadurch gekennzeichnet, dass** die Verriegelung mittels eines Hebels (114) erfolgt.

12. Anschluss nach einem der vorhergehenden Ansprüche, **dadurch gekennzeichnet, dass** das Gehäuse (44) Kammern (70, 72, 74) aufweist, in denen sich Kondensat staut.

13. Anschluss nach einem der vorhergehenden Ansprüche, **dadurch gekennzeichnet, dass** das Gehäuse (44) Kammern (70, 72, 74) aufweist, in denen sich Feststoffteilchen absetzen können.

14. Heizgerät mit einem Anschluss für ein Kondensat nach einem der vorhergehenden Ansprüche.

## Claims

1. Connector for a condensate of a heating unit (10), having a housing (44) which is connected or connectable to an exhaust gas path (38) and has a condensate outlet (46), wherein connected to the condensate outlet (46) is a tube (48) which is guided into a first region (50) below the housing (44) and, there, guided in a bend (52) upwards,
**characterized in that** the housing (44) is connectable to a negative-pressure region of an intake region for the combustion air.

2. Connector according to Claim 1, **characterized in that**, after the bend (52), the tube (48) is guided at least up to at least the height of the housing (44).

3. Connector according to one of the preceding claims, **characterized in that** connected to the condensate outlet (46) is a tube (48) which is guided in a first region (50) below the housing (44) and is guided in a second region above the housing (44).

4. Connector according to one of the preceding claims, **characterized in that** the tube (48) is guided in the first region (50) within a housing of a store (12).

5. Connector according to one of the preceding claims, **characterized in that** the housing (44) has one or a plurality of seals (64, 80) which are arranged in seal chambers (68, 82), and **in that** the seal chambers (68, 82) or regions adjacent to the seal chambers (68, 82) is/are connected to the negative-pressure region of an intake region for the combustion air.

6. Connector according to one of the preceding claims, **characterized in that** the housing (44) has at least one seal (64, 80), which has at least one opening (94, 100) or a plurality of openings.

7. Connector according to one of the preceding claims, **characterized in that** the housing is of two-part form and has at least two seals (64, 80) which, for their part, are penetrated by openings (94, 100).

8. Connector according to one of the preceding claims, **characterized in that** a connection to the negative-pressure region is created via the opening (94, 100) or the openings (94, 100) in the seal (64, 80) or the seals (64, 80).

9. Connector according to one of the preceding claims, **characterized in that** the housing (44) is connected to the exhaust-gas path via a plug connection(106) or via a plug-and-twist connection (106).

10. Connector according to one of the preceding claims, **characterized in that** the plug connection (106) or the plug-and-twist connection (106) is lockable.

11. Connector according to one of the preceding claims, **characterized in that** the locking action takes place by means of a lever (114).

12. Connector according to one of the preceding claims, **characterized in that** the housing (44) has chambers (70, 72, 74) in which condensate accumulates.

13. Connector according to one of the preceding claims, **characterized in that** the housing (44) has chambers (70, 72, 74) in which solid particles can settle.

14. Heating unit having a connector for a condensate according to one of the preceding claims.

## Revendications

1. Raccordement destiné à un condensat d'un appareil de chauffage (10), muni d'un carter (44) qui est relié ou peut être relié à un trajet de gaz d'échappement (38) et qui comporte une sortie de condensat (46), un flexible (48) étant raccordé à la sortie de condensat (46), lequel est guidé dans une première zone (50) située sous le carter (44) où il forme un coude (52) afin d'être guidé vers le haut,
**caractérisé en ce que** le carter (44) peut être relié à une zone à pression négative d'une zone d'admission d'air de combustion.

2. Raccordement selon la revendication 1, **caractérisé en ce que** le flexible (48) est guidé après le coude (52) jusqu'à au moins la hauteur du carter (44).

3. Raccordement selon l'une des revendications précédentes, **caractérisé en ce qu'**un flexible (48), qui est guidé dans une première zone (50) située sous le carter (44) et qui est guidé dans une deuxième zone située au-dessus du carter (44), est raccordé à la sortie de condensat (46).

4. Raccordement selon l'une des revendications précédentes, **caractérisé en ce que** le flexible (48) est guidé dans la première zone (50) à l'intérieur d'un carter d'un réservoir de stockage (12).

5. Raccordement selon l'une des revendications précédentes, **caractérisé en ce que** le carter (44) comporte un ou plusieurs joints d'étanchéité (64, 80) qui sont disposés dans des chambres d'étanchéité (68, 82) et **en ce que** les chambres d'étanchéité (68, 82) ou des zones adjacentes aux chambres d'étanchéité (68, 82) sont reliées à la zone à pression négative d'une zone d'admission d'air de combustion.

6. Raccordement selon l'une des revendications précédentes, **caractérisé en ce que** le carter (44) comporte au moins un joint d'étanchéité (64, 80) présentant au moins une ouverture (94, 100) ou plusieurs ouvertures.

7. Raccordement selon l'une des revendications précédentes, **caractérisé en ce que** le carter est en deux parties et comporte au moins deux joints d'étanchéité (64, 80), qui sont eux-mêmes traversés par des ouvertures (94, 100).

8. Raccordement selon l'une des revendications précédentes, **caractérisé en ce qu'**une liaison avec la zone à pression négative est créée par l'intermédiaire de l'ouverture (94, 100) ou des ouvertures (94, 100) dans le joint d'étanchéité (64, 80) ou les joints d'étanchéité (64, 80).

9. Raccordement selon l'une des revendications précédentes, **caractérisé en ce que** le carter (44) est relié au trajet de gaz d'échappement par un raccord enfichable (106) ou par un raccord rotatif enfichable (106).

10. Raccordement selon l'une des revendications précédentes, **caractérisé en ce que** le raccord enfichable (106) ou le raccord rotatif enfichable (106) est verrouillable.

11. Raccordement selon l'une des revendications précédentes, **caractérisé en ce que** le verrouillage est effectué au moyen d'un levier (114).

12. Raccordement selon l'une des revendications précédentes, **caractérisé en ce que** le carter (44) comporte des chambres (70, 72, 74) dans lesquelles s'accumule le condensat.

13. Raccordement selon l'une des revendications précédentes, **caractérisé en ce que** le carter (44) comporte des chambres (70, 72, 74) dans lesquelles des particules solides peuvent se déposer.

14. Appareil de chauffage comportant un raccordement destiné à un condensat selon l'une des revendications précédentes.
